# EUROPEAN PATENT SPECIFICATION

(11) **EP 4 224 659 B1**
(45) Date of publication and mention of the grant of the patent: **25.02.2026**
(21) Application number: 22814280.8
(22) Date of filing: 12.08.2022
(51) Int. Cl.: H02J 3/36, H02M 1/14, H02M 1/32, H02M 7/483, H02M 7/12

(54) **METHOD AND APPARATUS FOR SUPPRESSING OSCILLATION ON DIRECT-CURRENT SIDE OF FLEXIBLE DIRECT-CURRENT POWER TRANSMISSION SYSTEM, AND COMPUTER-READABLE STORAGE MEDIUM AND ELECTRONIC DEVICE**
VERFAHREN UND VORRICHTUNG ZUR UNTERDRÜCKUNG VON SCHWINGUNGEN AUF DER GLEICHSTROMSEITE EINES FLEXIBLEN GLEICHSTROMÜBERTRAGUNGSSYSTEMS SOWIE COMPUTERLESBARES SPEICHERMEDIUM UND ELEKTRONISCHE VORRICHTUNG
PROCÉDÉ ET APPAREIL DE SUPPRESSION D'OSCILLATION SUR UN CÔTÉ À COURANT CONTINU D'UN SYSTÈME DE TRANSMISSION DE PUISSANCE À COURANT CONTINU FLEXIBLE, ET SUPPORT DE STOCKAGE LISIBLE PAR ORDINATEUR ET DISPOSITIF ÉLECTRONIQUE

(30) Priority: 24.12.2021 CN 202111608574
(43) Date of publication of application: 09.08.2023
(73) Proprietor: State Grid Smart Grid Research Institute Co., Ltd., Beijing 102209 (CN); State Grid Corporation of China, Beijing 100031 (CN)
(72) Inventor: ZHOU, Xiao, Beijing 102209 (CN); KONG, Ming, Beijing 102209 (CN); LIU, Yali, Beijing 102209 (CN); HAN, Naizheng, Beijing 102209 (CN); JI, Ke, Beijing 102209 (CN)
(74) Representative: White, Andrew John
(86) International application number: PCT/CN2022/112109
(87) International publication number: WO 2023/115991

(56) References cited:
- CN-A- 108 258 891
- CN-A- 112 787 350
- CN-A- 113 162 070
- CN-A- 114 285 050
- LIU YALI ET AL: "Analysis and Suppression of the DC Side Oscillation for MMC Based VSC-HVDC System", 2021 6TH INTERNATIONAL CONFERENCE ON POWER AND RENEWABLE ENERGY (ICPRE), IEEE, 17 September 2021 (2021-09-17), pages 16 - 21, XP034049136, DOI: 10.1109/ICPRE52634.2021.9635254
- LIU, YALI ET AL.: "Analysis and Suppression of the DC Side Oscillation for MMC Based VSC- HVDC System", 2021 THE 6TH INTERNATIONAL CONFERENCE ON POWER AND RENEWABLE ENERGY, 20 September 2021 (2021-09-20), pages 16 - 21, XP034049136, DOI: 10.1109/ICPRE52634.2021.9635254

## Description

### TECHNICAL FIELD

The application relates to the technical field of flexible direct current (DC) transmission, and in particular to a method and apparatus for suppressing oscillation on a DC side of a flexible DC transmission system (FDCTS), a computer-readable storage medium, and an electronic device.

### BACKGROUND

A Voltage Source Converter (VSC)-based High Voltage Direct Current (HVDC) technology has advantages such as devoid of risk of commutation failure, independent control of active and reactive power, flexible operation, black start capability, or the like, and has been widely applied to fields such as large-scale renewable energy grid-connected transmission, isolated network power supply, asynchronous grid interconnection, or the like. VSC is a core device of FDCTS (VSC-HVDC). Among many topologies thereof, a Modular Multilevel Converter (MMC) is widely applied to the field of high-voltage and large-capacity flexible DC transmission based on characteristics of unique modular design, high expansibility, low switching losses, low harmonic content, or the like.

All control targets of MMC are implemented by means of throw-in and throw-over (which may also be referred as switching) of a bridge arm sub-module, and switching of the sub-module may also be regarded as dynamic combination of capacitors of the sub-module. Therefore, MMC may be regarded as combination of an equivalent dynamic capacitor and a bridge arm reactor from DC side, and the combination of the equivalent capacitor and the reactor will induce a resonant frequency point in the converter. Furthermore, in case of ideal operation, voltages of the capacitors of an MMC sub-module are exactly equal, and an output voltage of the bridge arm is completely consistent with a reference value of a control system. However, during actual operation, due to impact of non-ideal characteristics (such as a dead zone, control delay, or the like) of a switch device and the control system, there is certain deviation between voltages of the capacitors of the sub-module, resulting in an error between an actually output voltage of the bridge arm and the reference value of the control system, so that a harmonic voltage is produced, and a component of the harmonic voltage near the resonant frequency point produces, on the DC side, a harmonic current having the same frequency.

In some back-to-back FDCTSs or FDCTSs with short-distance transmission lines, equivalent damping of the system is relatively small, so that a harmonic component of a DC weak damping point is amplified, resulting in phenomenon of oscillation on the DC side. Under certain working conditions, an amplitude of the oscillating DC current increases significantly, which not only increases current stresses of the switch device and a primary device but also triggers a corresponding DC side protection action, even resulting in shutdown of the entire system, thereby reducing reliability of the system.

Related technologies are discussed in LIU YALI ET AL: "Analysis and Suppression of the DC Side Oscillation for MMC Based VSC-HVDC System". 2021 6TH INTERNATIONAL CONFERENCE ON POWER AND RENEWABLE ENERGY (ICPRE), IEEE. The prior art provides a method for suppressing oscillation on a DC side of a DC transmission system, wherein a voltage compensation value is calculated according to the DC component of the bridge arm currents and the DC component reference value of bridge arm currents so as to generate corrected bridge arm modulated waves according to the voltage compensation value and a circulating-current control voltage compensation value for the phase.

### SUMMARY

The present invention is defined in the claims. Embodiments of the application provide a method and apparatus for suppressing oscillation on a DC side of a FDCTS, a computer-readable storage medium, and an electronic device, to improve reliability of the system.

The technical solutions provided in the application have the following beneficial effects.

According to the method and apparatus for suppressing oscillation on a DC side of a FDCTS, the computer-readable storage medium, and the electronic device provided in the embodiments of the application, for each of three phases, single-phase active power on an AC side of a converter valve, a DC voltage reference value of a DC transmission system, bridge arm currents, and a circulating-current control voltage compensation value are acquired; a DC component reference value of bridge arm currents is calculated for the three phases according to the single-phase active power on the AC side of the converter valve and the DC voltage reference value of the DC transmission system for each of the three phases; a DC component of the bridge arm currents is calculated for each of the three phases according to the bridge arm currents for the phase; a voltage compensation value is calculate for each of the three phases according to the DC component of the bridge arm currents for the phase and the DC component reference value of bridge arm currents; and corrected bridge arm modulated waves are generated for each of the three phases according to the voltage compensation value and the circulating-current control voltage compensation value for the phase. Switching of an MMC sub-module is controlled by using the corrected bridge arm modulated wave, so that a problem of oscillation on the DC side of FDCTS composed of MMC may be effectively suppressed, and a stable operation of FDCTS may be achieved, thereby improving reliability of the system. Furthermore, according to the suppression method, oscillation suppression is implemented by a control algorithm of a Valve-Based Controller (VBC) only, without requiring additional high-voltage hardware devices in a high-voltage circuit. Furthermore, according to the suppression method, only an electrical quantity signal on a standard interface of an existing VBC is used, it is only required to add a corresponding algorithm program, without additional device interfaces and measurement devices. Compared with an existing method for suppressing oscillation, complexity of the device may be reduced.

### BRIEF DESCRIPTION OF THE DRAWINGS

In order to explain specific implementations of the application or technical solutions in the related art more clearly, drawings required to be used in descriptions of the specific implementations or the related art will be briefly described below. It is apparent that the drawings in the following descriptions are some implementations of the application. Other drawings may also be obtained by those of ordinary skill in the art according to these drawings, without paying any creative work.
FIG. 1 is a flowchart of a method for suppressing oscillation on a DC side of a FDCTS according to an embodiment of the application.
FIG. 2 is a structural block diagram of calculating a DC voltage reference value of a DC system by a method for suppressing oscillation on a DC side of a FDCTS according to an embodiment of the application.
FIG. 3 is a structural block diagram of calculating single-phase active power on an AC side of a converter valve by a method for suppressing oscillation on a DC side of a FDCTS according to an embodiment of the application.
FIG. 4 is a structural block diagram of calculating an AC current on a valve side of each phase by a method for suppressing oscillation on a DC side of a FDCTS according to an embodiment of the application.
FIG. 5 is a structural block diagram of calculating an AC voltage on a valve side of each phase by a method for suppressing oscillation on a DC side of a FDCTS according to an embodiment of the application.
FIG. 6 is a structural block diagram of calculating a DC component reference value of a bridge arm current of each phase by a method for suppressing oscillation on a DC side of a FDCTS according to an embodiment of the application.
FIG. 7 is a structural block diagram of calculating a DC component of a bridge arm current of each phase by a method for suppressing oscillation on a DC side of a FDCTS according to an embodiment of the application.
FIG. 8 is a structural block diagram of calculating a voltage compensation value by a method for suppressing oscillation on a DC side of a FDCTS according to an embodiment of the application.
FIG. 9 is a structural block diagram of calculating a corrected bridge arm modulated wave by a method for suppressing oscillation on a DC side of a FDCTS according to an embodiment of the application.
FIG. 10 is a flowchart of a method for suppressing oscillation on a DC side of a FDCTS according to another embodiment of the application.
FIG. 11 is a structural block diagram of an apparatus for suppressing oscillation on a DC side of a FDCTS according to an embodiment of the application.
FIG. 12 is a schematic structural diagram of a computer-readable storage medium according to an embodiment of the application.
FIG. 13 is a schematic structural diagram of an electronic device according to an embodiment of the application.

### DETAILED DESCRIPTION

In order to enable those skilled in the art to better understand solutions of the application, technical solutions in the embodiments of the application will be described clearly and completely below with reference to the drawings in the embodiments of the application. It is apparent that the described embodiments are only part of the embodiments of the application, rather than all of the embodiments of the application.

Terms "first", "second", "third", "fourth", or the like in the description, claims and the above-mentioned drawings of the application are intended to distinguish among similar objects, rather than describing a specific sequence or a sequential order. It should be understood that data used in such a way may be exchanged where appropriate, so that the embodiments described here may be implemented in an order other than those illustrated or described here. Furthermore, terms "include" and "have" and any variations thereof are intended to cover non-exclusive inclusions. For example, processes, methods, systems, products or devices including a series of operations or units are not limited to those clearly listed operations or units, instead, other operations or units which are not clearly listed or are inherent to these processes, methods, products or devices may be included.

As described above, once a harmonic wave present in a DC current of a FDCTS generates a phenomenon of oscillation on a DC side, a corresponding DC side protection action may be triggered, even resulting in shutdown of the entire system. At present, there is a method for solving a problem of oscillation of a DC transmission system in the related art, however, implementation of the method needs to directly acquire a current at a DC port of MMC. However, in a practical engineering implementation, in case of DC oscillation implemented by VBC of MMC, VBC may not acquire a DC signal according to an existing standard interface, so that a device interface is required to be changed, resulting in unnecessary investment. Therefore, there is an urgent need for a method which may not only resolve oscillation on the DC side but also avoid addition of additional devices and investment.

An embodiment of the application provides a method for suppressing oscillation on a DC side of a FDCTS. By means of using a standard input electrical quantity of VBC of MMC, a method for controlling active damping on a DC side of MMC is implemented. A phenomenon of current oscillation on the DC side of FDCTS may be effectively suppressed, and a stable operation of FDCTS may be improved, without adding any hardware or control and measurement interfaces.

An embodiment of the application provides a method for suppressing oscillation on a DC side of a FDCTS. It should be noted that operations shown in the flowcharts of the drawings may be executed in a computer system, such as a set of computer-executable instructions, and a logical sequence is shown in the flowchart, however, in some cases, operations shown or described may be executed in an order different from those shown here.

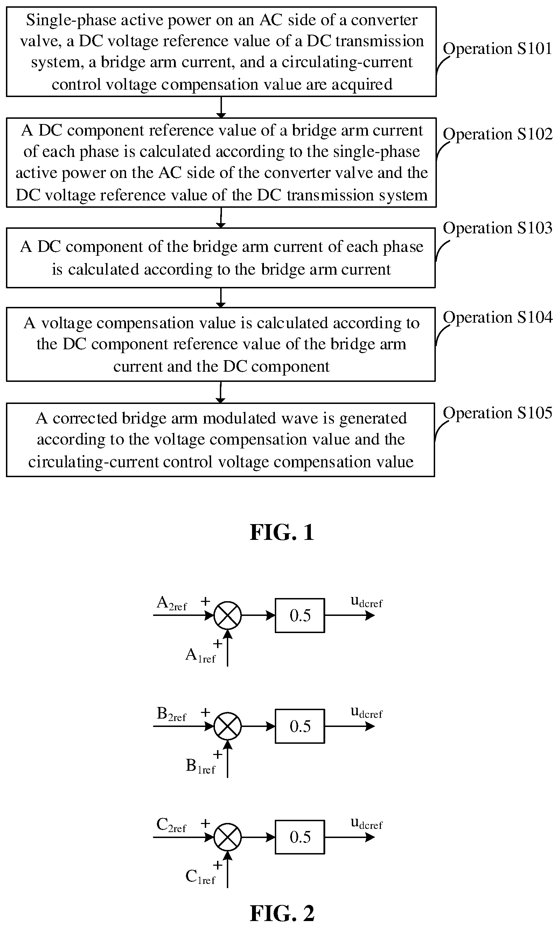

The embodiment provides a method for suppressing oscillation on a DC side of a FDCTS. The method may be applied to similar scenes such as FDCTS, a DC power grid, a DC distribution network, DC collection of new energies, or the like. FIG. 1 is a flowchart of a method for suppressing oscillation on a DC side of a FDCTS according to an embodiment of the application. As shown in FIG. 1, the method includes the following operations.

An embodiment of the application provides a method for suppressing oscillation on a DC side of a FDCTS. As shown in FIG. 1, the method includes the following operations.

In operation S101, single-phase active power on an AC side of a converter valve, a DC voltage reference value of a DC transmission system, a bridge arm current, and a circulating-current control voltage compensation value are acquired. Here the bridge arm current may be an electrical parameter measured by VBC. In a three-phase circuit, the bridge arm current includes an A-phase bridge arm current, a B-phase bridge arm current and a C-phase bridge arm current. Furthermore, each phase includes an upper bridge arm and a lower bridge arm. Therefore, the acquired bridge arm current includes 6 bridge arm currents.

In the application, the circulating-current control voltage compensation value is voltage compensation value outputted by a circulating-current controller disposed in MMC. In MMC, three-phase bridge arms thereof are equivalently connected to a DC side in parallel. Voltages between the bridge arms during stable operation may not be exactly the same, so that a circulating current is generated between the three-phase bridge arms of MMC, resulting in distortion in a sinusoidal wave form of a bridge arm current. When the harmonic circulating current is not suppressed, not only power loss of MMC is increased, but also stable operation of MMC may be damaged. Therefore, the circulating-current controller is usually disposed in MMC, to suppress the circulating current in the bridge arm. However, the circulating-current controller may only suppress the circulating current within MMC, and there are also harmonic currents among multiple converters, which may not be adjusted based on the circulating-current controller. Therefore, adjustment is performed by combining the circulating-current control voltage compensation value with voltage compensation value calculated by other electrical quantities.

The single-phase active power on the AC side of the converter valve includes A-phase active power, B-phase active power and C-phase active power, that is, three single-phase active power on the AC side of the converter valve. In some implementations, the single-phase active power on the AC side of the converter valve and the DC voltage reference value (or a DC voltage) of the DC transmission system may be measurement signals obtained by direct measurement. That is to say, VBC may directly acquire the single-phase active power on the AC side of the converter valve and the DC voltage reference value (or the DC voltage) of the DC transmission system from upper-level control, so that the single-phase active power on the AC side of the converter valve and the DC voltage reference value (or the DC voltage) of the DC transmission system may be directly acquired and used in the method.

In some implementations, when the DC voltage reference value (or the DC voltage) of the DC transmission system may not be directly acquired, a bridge arm reference wave may be acquired by VBC from upper-level control, and then the DC voltage reference value of the DC transmission system is calculated according to the bridge arm reference wave. Similar to the bridge arm current, the acquired bridge arm reference wave also includes 6 bridge arm reference waves, since each phase includes an upper bridge arm and a lower bridge arm. As shown in FIG. 2, when the DC voltage reference value of the DC transmission system is calculated, upper and lower bridge arm reference waves (which are shown as A_{1ref}, A_{2ref}, B_{1ref}, B_{2ref}, C_{1ref} and C_{2ref} in FIG. 2) of any phase are selected and added to obtain a sum, and then the obtained sum is multiplied by 0.5, so that the DC voltage reference value (which is shown as u_{dcref} in FIG. 2) of the DC transmission system is obtained.

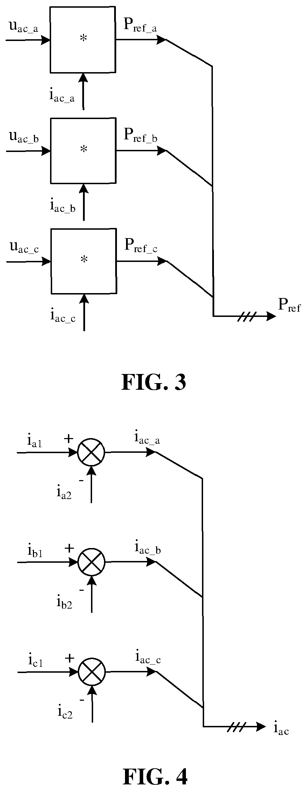

In some implementations, when the single-phase active power on the AC side of the converter valve may not be directly acquired either, then as shown in FIG. 3, measurement signals of an AC voltage (which is shown as u_{ac_a}, u_{ac_b} and u_{ac_c} in FIG. 3) on a valve side of each singe-phase and an AC current on the valve side of each singe-phase (which is shown as i_{ac_a}, i_{ac_b} and i_{ac_c} in FIG. 3) may be acquired. The AC voltage on the valve side of each singe-phase and the AC current on the valve side of each singe-phase are multiplied (* represents multiplying in FIG. 3), so that each single-phase active power *Pᵣₑₜ* on the AC side of the converter valve (which is shown as P_{ref_a}, P_{ref_b} and P_{ref_c} in FIG. 3) may be obtained.

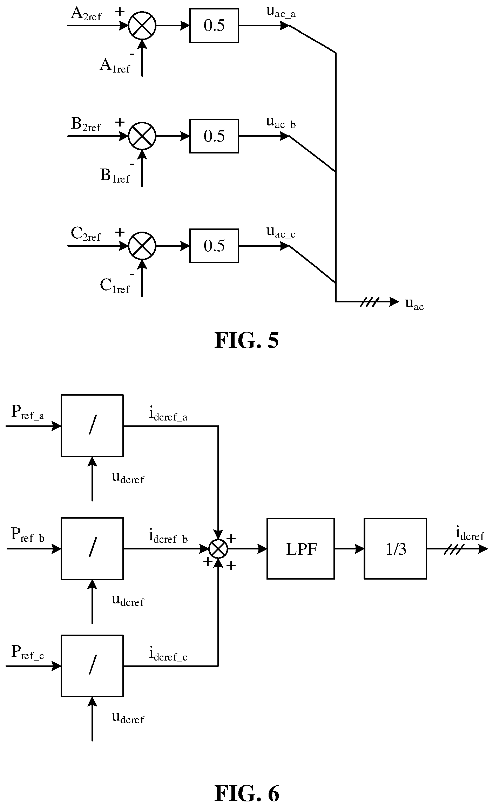

In some implementations, when both an AC voltage on a valve side of each phase and an AC current on the valve side of each phase may not be directly acquired, the AC voltage on the valve side of each phase and the AC current on the valve side of each phase may be calculated respectively by the bridge arm reference wave and the bridge arm current acquired by VBC. In some embodiments of the application, as shown in FIG. 4, a difference value between upper and lower bridge arm currents (which are shown as iₐ₁, iₐ₂, i_{b1}, i_{b2}, i_{c1} and i_{c2} in FIG. 4) of each phase from 6 bridge arm currents acquired by VBC may be obtained, so that the AC current *i_{ac}* (which is shown as i_{ac_a}, i_{ac}__{b} and i_{ac}__{c} in FIG. 4) on the valve side of each single-phase is calculated. Furthermore, as shown in FIG. 5, a difference value between upper and lower bridge arm reference waves (which are shown as A_{1ref}, A_{2ref}, B_{1ref}, B_{2ref}, C_{1ref} and C_{2ref} in FIG. 5) of each phase from 6 bridge arm reference waves acquired by VBC may be obtained, and then the difference value is multiplied by 0.5, so that the AC voltage *u_{ac}* (which is shown as u_{ac_a}, u_{ac_b} and u_{ac_c} in FIG. 5) on the valve side of each single-phase is calculated.

In operation S102, a DC component reference value of a bridge arm current of each phase is calculated according to the single-phase active power on the AC side of the converter valve and the DC voltage reference value of the DC transmission system. As shown in FIG. 6, when the DC component reference value of the bridge arm current is calculated, each single-phase active power *P_{ref}* (which is shown as P_{ref_a}, P_{ref_b} and P_{ref_c} in FIG. 6) on the AC side of the converter valve is divided by the DC voltage reference value *u_{dcref}* of the DC transmission system, to obtain a DC component (which is shown as i_{dcref_a}, i_{dcref_b} and i_{dcref_c} in FIG. 6) of each single-phase current; and then three single-phase DC components are added, filtered by LPF, and then divided by 3 (which is shown as multiplying by 1/3 in FIG. 6), so as to obtain the DC component reference value *i_{dcref}* of the bridge arm current of each phase.

Furthermore, in the following examples which are not within the scope of the present invention, the DC component reference value of the bridge arm current may also be obtained in other manners. For example, a quotient obtained by dividing the single-phase active power on the AC side of the converter valve by the DC voltage reference value (or the DC voltage) of the DC transmission system is directly used as the DC component reference value of the bridge arm current. In the application, the DC component reference value may be acquired in three manners. The first manner is to divide single-phase power by a DC voltage reference value (which is communicatively transmitted by upper-level control); the second manner is to divide single-phase power by a DC voltage reference value (which is calculated by the method for suppressing oscillation); and the third manner is to divide single-phase power by a DC voltage (which is communicatively transmitted by upper-level control or separately measured). The three manners acquire the DC voltage reference value or the DC voltage by different ways from each other. How to calculate the DC component reference value of the bridge arm current is not limited in the application. It should be noted that when suppression of oscillation on the DC side is performed based on the DC component reference value of the bridge arm current of each phase calculated by the first manner, a better effect may be achieved.

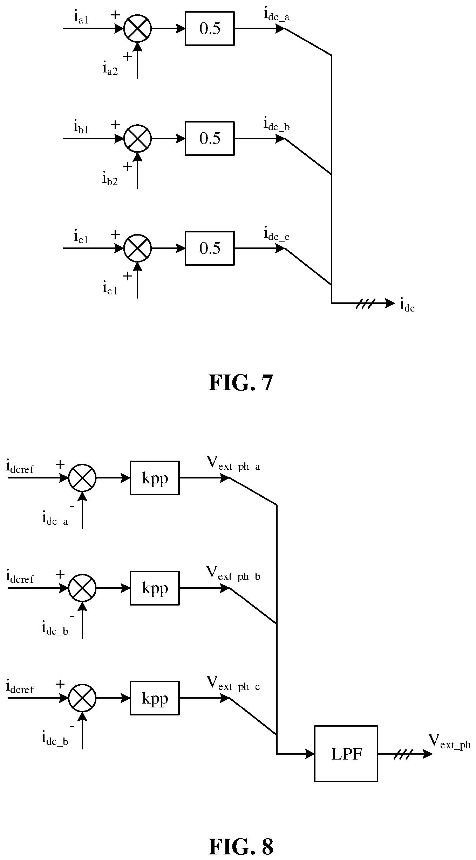

In operation S103, a DC component of the bridge arm current of each phase is calculated according to the bridge arm current. In the application, it may be known from the above operations that as shown in FIG. 7, the bridge arm current includes 6 bridge arm currents (which are shown as iₐ₁, iₐ₂, i_{b1}, i_{b2}, i_{c1} and i_{c2} in FIG. 7). When the DC component is calculated, upper and lower bridge arm currents of each phase from the 6 bridge arm currents may be added to obtain a sum, and then the obtained sum is multiplied by 0.5, so that the DC component *i_{dc}* (which is shown as i_{dc_a}, i_{dc_b} and i_{dc_c} in FIG. 7) of the bridge arm current of each single-phase may be obtained.

In operation S104, a voltage compensation value is calculated according to the DC component reference value of the bridge arm current and the DC component. As shown in FIG. 8, the voltage compensation value is calculated as follows. A DC component difference value is obtained according to comparison between the DC component reference value of the bridge arm current and the DC component. A first compensation value is calculated according to the DC component difference value and a preset proportional coefficient. The voltage compensation value is obtained by filtering of LPF according to the first compensation value.

In the application, as shown in FIG. 8, the preset proportional coefficient kpp is equivalent to a virtual damping coefficient. Dimension of the preset proportional coefficient is ohm. After the DC component difference value is obtained by a difference value between the DC component reference value (which is shown as i_{dcref} in FIG. 8) of the bridge arm current and the DC component (which is shown as i_{dca}, i_{dc_b} and i_{dc_c} in FIG. 8), the DC component difference value and the preset proportional coefficient (which is shown as kpp in FIG. 8) are multiplied to obtain results, and then the obtained results (which are shown as V_{ext_ph_a}, V_{ext_ph_b} and V_{ext_ph_c} in FIG. 8) pass through LPF (which is shown as LPF in FIG. 8), so that the voltage compensation value *V_{ext_ph}* may be obtained.

In operation S105, a corrected bridge arm modulated wave is generated according to the voltage compensation value and the circulating-current control voltage compensation value. When the corrected bridge arm modulated wave is generated, the voltage compensation value and the circulating-current control voltage compensation value are superimposed on the bridge arm reference wave respectively. That is to say, a first bridge arm reference wave is generated according to the voltage compensation value and the bridge arm reference wave, and then a corrected bridge arm reference wave is generated according to the first bridge arm reference wave and the circulating-current control voltage compensation value. Furthermore, the voltage compensation value and the circulating-current control voltage compensation value may be added and then superimposed on the bridge arm reference wave. That is to say, a second compensation value is generated according to the voltage compensation value and the circulating-current control voltage compensation value, and then the second compensation value is superimposed on the bridge arm reference wave, to generate the corrected bridge arm reference wave.

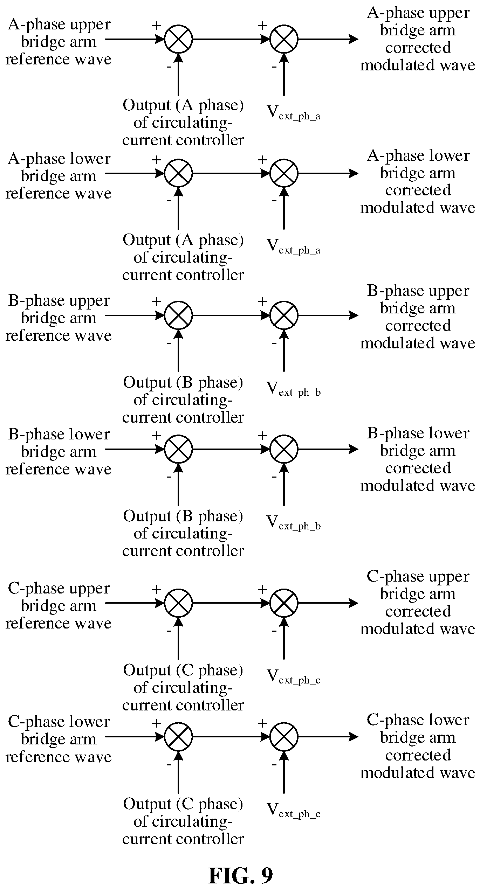

In the application, the corrected bridge arm modulated wave may be used to control switching of subsequent MMC sub-modules. Since each phase in an MMC sub-module includes an upper bridge arm and a lower bridge arm, then as shown in FIG. 9, when the bridge arm reference waves (which are shown as an A-phase upper bridge arm reference wave, an A-phase lower bridge arm reference wave, a B-phase upper bridge arm reference wave, a B-phase lower bridge arm reference wave, a C-phase upper bridge arm reference wave and a C-phase lower bridge arm reference wave in FIG. 9) are modulated, the voltage compensation value (which is shown as V_{ext_ph_a}, V_{ext_ph_b} and V_{ext_ph_c} in FIG. 9) and the circulating-current control voltage compensation value may be superimposed on upper and lower bridge arms of each phase (which is shown as an A phase, a B phase and a C phase in FIG. 9) respectively, so that a corrected upper bridge arm modulated wave and a corrected lower bridge arm modulated wave of each phase may be obtained. Furthermore, the suppression method may also be applied to other hierarchical control, for example, may be used for pole control of an upper-level converter.

According to the method for suppressing oscillation on a DC side of a FDCTS provided in the embodiments of the application, single-phase active power on an AC side of a converter valve, a DC voltage reference value of a DC transmission system, a bridge arm current, and a circulating-current control voltage compensation value are acquired; a DC component reference value of a bridge arm current of each phase is calculated according to the single-phase active power on the AC side of the converter valve and the DC voltage reference value of the DC transmission system; a DC component of the bridge arm current of each phase is calculated according to the bridge arm current; a voltage compensation value is calculated according to the DC component reference value of the bridge arm current and the DC component; and a corrected bridge arm modulated wave is generated according to the voltage compensation value and the circulating-current control voltage compensation value. Switching of an MMC sub-module is controlled by using the bridge arm modulated wave, so that a problem of oscillation on the DC side of FDCTS composed of MMC may be effectively suppressed, and a stable operation of FDCTS may be achieved, thereby improving reliability of the system. Furthermore, according to the suppression method, oscillation suppression is implemented by a control algorithm of VBC only, without requiring additional high-voltage hardware devices in a high-voltage circuit. Furthermore, according to the suppression method, only an electrical quantity signal on a standard interface of an existing VBC is used, it is only required to add a corresponding algorithm program, without additional device interfaces and measurement devices. Compared with a method for suppressing oscillation in the related art, complexity of the device may be reduced.

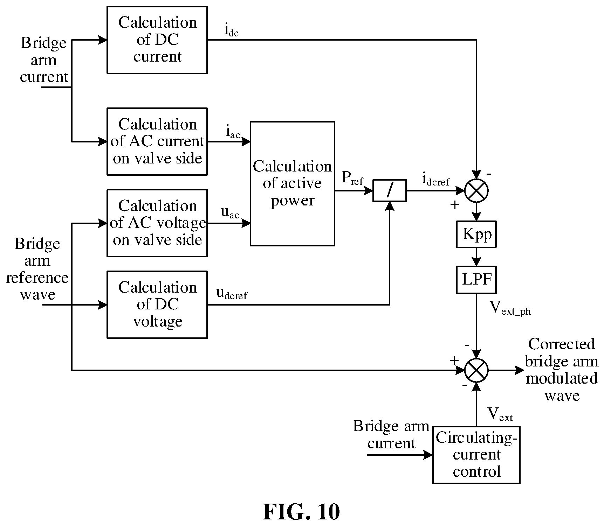

In some implementations, as shown in FIG. 10, the method for suppressing oscillation on a DC side of a FDCTS is implemented by the following processes. Upper and lower bridge arm currents of each phase from 6 bridge arm currents measured by VBC may be added to obtain a sum, and then the obtained sum is divided by 2, to calculate the DC component *i_{dc}* of the bridge arm current of each phase. A difference value between upper and lower bridge arm currents of each phase from 6 bridge arm currents measured by VBC may be obtained, to calculate the AC current *i_{ac}* on the valve side of each phase. A difference value between upper and lower bridge arm reference waves of each phase from 6 bridge arm reference waves acquired by VBC from upper-level control may be obtained, to calculate the AC voltage *u_{ac}* on the valve side of each phase. According to the calculated AC voltage *u_{ac}* and AC current *i_{ac}* on the valve side of each phase, three single-phase active power *Pᵣₑₜ* on the AC side of the converter valve are calculated. Upper and lower bridge arm reference waves of any phase from 6 bridge arm reference waves acquired by VBC from upper-level control may be selected and added to obtain a sum, and then the obtained sum is divided by 2, to obtain the DC voltage reference value *u_{dcref}* of the DC system. The calculated single-phase power *P_{ref}* is divided by the calculated DC voltage reference value *u_{dcref},* to obtain the DC component *i_{deref}* of the single-phase current; and then three single-phase DC components are added, filtered by LPF, and then divided by 3, so as to obtain the DC component reference value of the bridge arm current of each phase. The calculated DC component reference value of the bridge arm current of each phase is compared with the calculated DC component of the bridge arm current of each phase to obtain a difference value, and the difference value is multiplied by the preset proportional coefficient kpp, and then the voltage compensation value *V_{ext_ph}* is generated by passing through LPF. The calculated voltage compensation value *V_{ext_ph}* and the circulating-current control voltage compensation value *Vₑₓₜ* are superimposed together on the bridge arm reference wave received by VBC, to generate the corrected bridge arm modulated wave, and the corrected bridge arm modulated wave is used to control switching of subsequent MMC sub-modules.

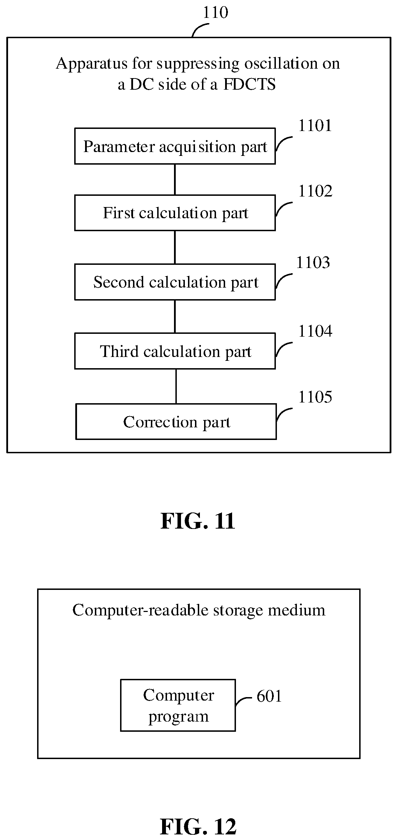

An embodiment of the application further provides an apparatus for suppressing oscillation on a DC side of a FDCTS. As shown in FIG. 11, the apparatus 110 for suppressing oscillation on a DC side of a FDCTS includes a parameter acquisition part 1101, a first calculation part 1102, a second calculation part 1103, a third calculation part 1104, and a correction part 1105.

The parameter acquisition part 1101 is configured to acquire single-phase active power on an AC side of a converter valve, a DC voltage reference value of a DC transmission system, a bridge arm current, and a circulating-current control voltage compensation value. Related contents may refer to corresponding portions of the above method embodiments, which is not elaborated here again.

The first calculation part 1102 is configured to calculate a DC component reference value of a bridge arm current of each phase, according to the single-phase active power on the AC side of the converter valve and the DC voltage reference value of the DC transmission system. Related contents may refer to corresponding portions of the above method embodiments, which is not elaborated here again.

The second calculation part 1103 is configured to calculate a DC component of the bridge arm current of each phase, according to the bridge arm current. Related contents may refer to corresponding portions of the above method embodiments, which is not elaborated here again.

The third calculation part 1104 is configured to calculate a voltage compensation value, according to the DC component reference value of the bridge arm current and the DC component. Related contents may refer to corresponding portions of the above method embodiments, which is not elaborated here again.

The correction part 1105 is configured to generate a corrected bridge arm modulated wave, according to the voltage compensation value and the circulating-current control voltage compensation value. Related contents may refer to corresponding portions of the above method embodiments, which is not elaborated here again.

The third calculation part 1104 is further configured to: obtain a DC component difference value, according to comparison between the DC component reference value of the bridge arm current and the DC component; calculate a first compensation value, according to the DC component difference value and a preset proportional coefficient; and calculate, by LPF, the voltage compensation value according to the first compensation value.

In some embodiments of the application, the correction part 1105 is further configured to: generate a first bridge arm reference wave, according to the voltage compensation value and an initial bridge arm reference wave; and generate a corrected bridge arm reference wave, according to the first bridge arm reference wave and the circulating-current control voltage compensation value.

In some embodiments of the application, the parameter acquisition part 1101 is further configured to: acquire an AC current on a valve side of each phase and an AC voltage on the valve side of each phase; and calculate the single-phase active power on the AC side of the converter valve, according to the AC current on the valve side of each phase and the AC voltage on the valve side of each phase.

In some embodiments of the application, the parameter acquisition part 1101 is further configured to: obtain the AC current on the valve side of each phase, according to a difference value between an upper bridge arm current and a lower bridge arm current.

In some embodiments of the application, the parameter acquisition part 1101 is further configured to: acquire an upper bridge arm reference wave and a lower bridge arm reference wave of each phase; and obtain the AC voltage on the valve side of each phase, according to half of a difference value between the upper bridge arm reference wave and the lower bridge arm reference wave of each phase.

In some embodiments of the application, the parameter acquisition part 1101 is further configured to: acquire an upper bridge arm reference wave and a lower bridge arm reference wave of each phase; and obtain the DC voltage reference value of the DC transmission system, according to half of a sum of the upper bridge arm reference wave and the lower bridge arm reference wave of each phase.

According to the apparatus for suppressing oscillation on a DC side of a FDCTS provided in the embodiments of the application, single-phase active power on an AC side of a converter valve, a DC voltage reference value of a DC transmission system, a bridge arm current, and a circulating-current control voltage compensation value are acquired; a DC component reference value of a bridge arm current of each phase is calculated according to the single-phase active power on the AC side of the converter valve and the DC voltage reference value of the DC transmission system; a DC component of the bridge arm current of each phase is calculated according to the bridge arm current; a voltage compensation value is calculated according to the DC component reference value of the bridge arm current and the DC component; and a corrected bridge arm modulated wave is generated according to the voltage compensation value and the circulating-current control voltage compensation value. Switching of an MMC sub-module is controlled by using the bridge arm modulated wave, so that a problem of oscillation on the DC side of FDCTS composed of MMC may be effectively suppressed, and a stable operation of FDCTS may be achieved, thereby improving reliability of the system. Furthermore, according to the suppression method, oscillation suppression is implemented by a control algorithm of VBC only, without requiring additional high-voltage hardware devices in a high-voltage circuit. Furthermore, according to the suppression method, only an electrical quantity signal on a standard interface of an existing VBC is used, it is only required to add a corresponding algorithm program, without additional device interfaces and measurement devices. Compared with a method for suppressing oscillation in the related art, complexity of the device may be reduced.

Detailed function descriptions of the apparatus for suppressing oscillation on a DC side of a FDCTS provided in the embodiment of the application, may refer to descriptions of the method for suppressing oscillation on a DC side of a FDCTS in the above embodiments.

An embodiment of the application further provides a computer-readable storage medium. As shown in FIG. 12, the computer-readable storage medium has stored thereon a computer program 601. Operations of the method for suppressing oscillation on a DC side of a FDCTS described in the above embodiments are implemented when instructions are executed by a processor. The storage medium also has stored thereon audio and video stream data, characteristic frame data, interactive request signaling, encrypted data, preset data size, or the like. The storage medium may be a magnetic disk, an optical disk, a Read-Only Memory (ROM), a Random Access Memory (RAM), a flash memory, a Hard Disk Drive (HDD), a Solid-State Drive (SSD), or the like. The storage medium may further include a combination of the above types of memories.

It may be understood by those skilled in the art that all or part of the processes of the above method embodiments may be implemented by a computer program instructing related hardware, and the program may be stored in a computer-readable storage medium. When the program is executed, the processes of the above method embodiments may be included. The storage medium may be a magnetic disk, an optical disk, ROM, RAM, a flash memory, HDD, SSD, or the like. The storage medium may further include a combination of the above types of memories.

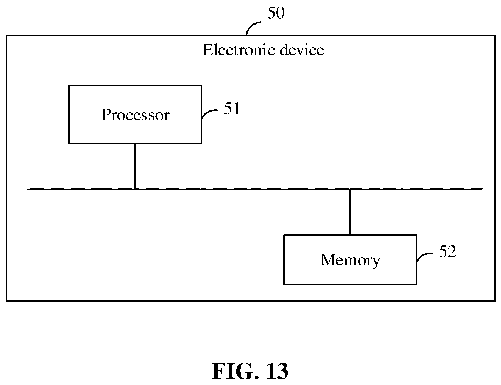

An embodiment of the application further provides an electronic device. As shown in FIG. 13, the electronic device 50 includes a processor 51 and a memory 52. The processor 51 may be connected to the memory 52 by a bus or in other manners. In FIG. 13, connection by a bus is taken as an example.

The processor 51 may be a Central Processing Unit (CPU). The processor 51 may also be another general processor, a Digital Signal Processor (DSP), an Application Specific Integrated Circuit (ASIC), a Field-Programmable Gate Array (FPGA), or another chip such as a programmable logic device, a discrete gate or transistor logic device, a discrete hardware component, or the like, or a combination of the above chips.

As a non-transient computer-readable storage medium, the memory 52 may be configured to store non-transient software programs non-transient computer-executable programs and modules, for example, corresponding program instructions/modules in the embodiments of the application. The processor 51 executes various functional applications and data processing of the processor by running the non-transient software programs, instructions and modules stored in the memory 52, that is to say, the processor implements the method for suppressing oscillation on a DC side of a FDCTS in the above method embodiments.

The memory 52 may include a program storage area region and a data storage area. The program storage area may store application program required to operate the apparatus and at least one function. The data storage area may store data created by the processor 51, etc. Furthermore, the memory 52 may include a high-speed RAM, and may further include a non-transient memory, such as at least one disk memory device, a flash memory device, or other non-transient solid-state memory devices. In some embodiments, the memory 52 may include memories remotely disposed relative to the processor 51. These remote memories may be connected to the processor 51 by a network. Examples of the above network include, but are not limited to Internet, an intranet, a local area network (LAN), a mobile communication network, and a combination thereof.

The one or more modules are stored in the memory 52, and execute the method for suppressing oscillation on a DC side of a FDCTS in any one of the embodiments shown in FIG. 1 to FIG. 10 when they are executed by the processor 51.

Related details of the electronic device 50 may refer to corresponding related descriptions and effects in any one of the embodiments shown in FIG. 1 to FIG. 10 for understanding, which is not elaborated here again.

Although the embodiments of the application are described with reference to the drawings, those skilled in the art may make various modifications and variations to the application without departing from the scope of the application, and such modifications and variations fall within the scope of the appended claims.

### INDUSTRIAL APPLICABILITY

The embodiments of the application disclose a method and apparatus for suppressing oscillation on a DC side of a FDCTS, a computer-readable storage medium, and a electronic device. The method includes the following operations. Single-phase active power on an AC side of a converter valve, a DC voltage reference value of a DC transmission system, a bridge arm current, and a circulating-current control voltage compensation value are acquired; a DC component reference value of a bridge arm current of each phase is calculated according to the single-phase active power on the AC side of the converter valve and the DC voltage reference value of the DC transmission system; a DC component of the bridge arm current of each phase is calculated according to the bridge arm current; a voltage compensation value is calculated according to the DC component reference value of the bridge arm current and the DC component; and a corrected bridge arm modulated wave is generated according to the voltage compensation value and the circulating-current control voltage compensation value. Through implementation of the application, a problem of oscillation on the DC side may be effectively suppressed, and a stable operation of FDCTS may be achieved, thereby improving reliability of the system. Furthermore, only an electrical quantity signal on a standard interface of an existing VBC is used, without requiring additional device interfaces and measurement devices in a high-voltage circuit, so that complexity of the device may be reduced.

## Claims

1. A method for suppressing oscillation on a direct current, DC, side of a flexible DC transmission system, FDCTS, wherein the method comprises:
acquiring (S101), for each of three phases, single-phase active power on an alternating current, AC, side of a converter valve, a DC voltage reference value of a DC transmission system, bridge arm currents, and a circulating-current control voltage compensation value;
calculating (S102), for the three phases, a DC component reference value of bridge arm currents, according to the single-phase active power on the AC side of the converter valve and the DC voltage reference value of the DC transmission system for each of the three phases;
calculating (S103), for each of the three phases, a DC component of the bridge arm currents, according to the bridge arm currents for the phase;
calculating (S104), for each of the three phases, a voltage compensation value, according to the DC component of the bridge arm currents for the phase and the DC component reference value of bridge arm currents; and
generating (S105), for each of the three phases, corrected bridge arm modulated waves, according to the voltage compensation value and the circulating-current control voltage compensation value for the phase;
wherein calculating (S102), for the three phases, the DC component reference value of bridge arm currents, according to the single-phase active power on the AC side of the converter valve and the DC voltage reference value of the DC transmission system for each of the three phases comprises:
dividing, for each of the three phases, the single-phase active power on the AC side of the converter valve by the DC voltage reference value of the DC transmission system, to obtain a single-phase DC component for the phase;
adding the single-phase DC components for the three phases, to obtain a sum of the single-phase DC components; and
filtering, by a first Low-Pass Filter, LPF, the sum of the single-phase DC components, and dividing the filtered sum of the single-phase DC components by 3, to obtain the DC component reference value of bridge arm currents;
wherein calculating (S104), for each of the three phases, the voltage compensation value, according to the DC component of the bridge arm currents for the phase and the DC component reference value of bridge arm currents comprises:
obtaining, for each of the three phases, a DC component difference value, according to comparison between the DC component of the bridge arm currents for the phase and the DC component reference value of bridge arm currents;
calculating, for each of the three phases, a first compensation value, according to the DC component difference value for the phase and a preset proportional coefficient; and
calculating, for each of the three phases, by a second LPF, the voltage compensation value according to the first compensation value for the phase.

2. The method of claim 1, wherein generating (S105), for each of the three phases, the corrected bridge arm modulated waves, according to the voltage compensation value and the circulating-current control voltage compensation value for the phase comprises:
generating, for each of the three phases, first bridge arm reference waves, according to the voltage compensation value and initial bridge arm reference waves for the phase; and
generating, for each of the three phases, corrected bridge arm reference waves, according to the first bridge arm reference waves and the circulating-current control voltage compensation value for the phase.

3. The method of claim 1, wherein acquiring (S101), for each of the three phases, the single-phase active power on the AC side of the converter valve comprises:
acquiring, for each of the three phases, an AC current on a valve side and an AC voltage on the valve side; and
calculating, for each of the three phases, the single-phase active power on the AC side of the converter valve, according to the AC current on the valve side and the AC voltage on the valve side for the phase.

4. The method of claim 3, wherein acquiring, for each of the three phases, the AC current on the valve side comprises:
obtaining, for each of the three phases, the AC current on the valve side, according to a difference value between an upper bridge arm current and a lower bridge arm current for the phase.

5. The method of claim 3, wherein acquiring, for each of the three phases, the AC voltage on the valve side comprises:
acquiring, for each of the three phases, an upper bridge arm reference wave and a lower bridge arm reference wave; and
obtaining, for each of the three phases, the AC voltage on the valve side, according to half of a difference value between the upper bridge arm reference wave and the lower bridge arm reference wave for the phase.

6. The method of claim 1, wherein acquiring (S101), for each of the three phases, the DC voltage reference value of the DC transmission system comprises:
acquiring, for each of the three phases, an upper bridge arm reference wave and a lower bridge arm reference wave; and
obtaining, for each of the three phases, the DC voltage reference value of the DC transmission system, according to half of a sum of the upper bridge arm reference wave and the lower bridge arm reference wave for the phase.

7. An apparatus (110) for suppressing oscillation on a direct current, DC, side of a flexible DC transmission system, FDCTS, wherein the apparatus comprises:
a parameter acquisition part (1101) configured to acquire, for each of three phases, single-phase active power on an alternating current, AC, side of a converter valve, a DC voltage reference value of a DC transmission system, bridge arm currents, and a circulating-current control voltage compensation value;
a first calculation part (1102) configured to calculate, for the three phases, a DC component reference value of bridge arm currents, according to the single-phase active power on the AC side of the converter valve and the DC voltage reference value of the DC transmission system for each of the three phases;
a second calculation part (1103) configured to calculate, for each of the three phases, a DC component of the bridge arm currents, according to the bridge arm currents for the phase;
a third calculation part (1104) configured to calculate, for each of the three phases, a voltage compensation value, according to the DC component of the bridge arm currents for the phase and the DC component reference value of bridge arm currents; and
a correction part (1105) configured to generate, for each of the three phases, corrected bridge arm modulated waves, according to the voltage compensation value and the circulating-current control voltage compensation value for the phase;
wherein the first calculation part (1102) is further configured to:
divide, for each of the three phases, the single-phase active power on the AC side of the converter valve by the DC voltage reference value of the DC transmission system, to obtain a single-phase DC component for the phase;
add the single-phase DC components for the three phases, to obtain a sum of the single-phase DC components; and
filter, by a first Low-Pass Filter, LPF, the sum of the single-phase DC components, and divide the filtered sum of the single-phase DC components by 3, to obtain the DC component reference value of bridge arm currents;
wherein the third calculation part (1104) is further configured to:
obtain, for each of the three phases, a DC component difference value, according to comparison between the DC component of the bridge arm currents for the phase and the DC component reference value of bridge arm currents;
calculate, for each of the three phases, a first compensation value, according to the DC component difference value for the phase and a preset proportional coefficient; and
calculate, for each of the three phases, by a second LPF, the voltage compensation value according to the first compensation value for the phase.

8. A computer-readable storage medium, having stored thereon computer instructions, the computer instructions enabling a computer to execute the method for suppressing oscillation on a DC side of a FDCTS of any one of claims 1 to 6.

9. An electronic device (50), comprising a memory (52) and a processor (51) communicatively connected to each other, the memory (52) storing computer instructions, and the processor (51) configured to execute the method for suppressing oscillation on a DC side of a FDCTS of any one of claims 1 to 6 by executing the computer instructions.

## Patentansprüche

1. Verfahren zum Unterdrücken von Schwingungen auf einer Gleichstromseite, DC-Seite, eines flexiblen Gleichstromübertragungssystems, FDCTS, wobei das Verfahren umfasst:
Erfassen (S101), für jede der drei Phasen, einer einphasigen Wirkleistung auf einer Wechselstromseite, AC-Seite, eines Umrichterventils, eines DC-Spannungsreferenzwerts eines DC-Übertragungssystems, von Brückenzweigströmen und eines Kreisstrom-Regelspannungskompensationswerts;
Berechnen (S102), für die drei Phasen, eines DC-Komponentenreferenzwerts von Brückenzweigströmen gemäß der einphasigen Wirkleistung auf der AC-Seite des Umrichterventils und dem DC-Spannungsreferenzwert des DC-Übertragungssystems für jede der drei Phasen;
Berechnen (S103), für jede der drei Phasen, einer DC-Komponente der Brückenzweigströme gemäß den Brückenzweigströmen für die Phase;
Berechnen (S104), für jede der drei Phasen, eines Spannungskompensationswerts gemäß der DC-Komponente der Brückenzweigströme für die Phase und dem DC-Komponentenreferenzwert der Brückenzweigströme; und
Erzeugen (S105), für jede der drei Phasen, von korrigierten Brückenzweigmodulationswellen gemäß dem Spannungskompensationswert und dem Kreisstrom-Regelspannungskompensationswert für die Phase;
wobei das Berechnen (S102), für die drei Phasen, des DC-Komponentenreferenzwerts von Brückenzweigströmen gemäß der einphasigen Wirkleistung auf der AC-Seite des Umrichterventils und dem DC-Spannungsreferenzwert des DC-Übertragungssystems für jede der drei Phasen umfasst:
Dividieren, für jede der drei Phasen, der einphasigen Wirkleistung auf der AC-Seite des Umrichterventils durch den DC-Spannungsreferenzwert des DC-Übertragungssystems, um eine einphasige DC-Komponente für die Phase zu erhalten;
Addieren der einphasigen DC-Komponenten für die drei Phasen, um eine Summe der einphasigen DC-Komponenten zu erhalten; und
Filtern, durch einen ersten Tiefpassfilter, LPF, der Summe der einphasigen DC-Komponenten und Dividieren der gefilterten Summe der einphasigen DC-Komponenten durch 3, um den DC-Komponentenreferenzwert der Brückenzweigströme zu erhalten;
wobei das Berechnen (S104), für jede der drei Phasen, des Spannungskompensationswerts gemäß der DC-Komponente der Brückenzweigströme für die Phase und dem DC-Komponentenreferenzwert der Brückenzweigströme umfasst:
Erhalten, für jede der drei Phasen, eines DC-Komponentendifferenzwerts gemäß einem Vergleich zwischen der DC-Komponente der Brückenzweigströme für die Phase und dem DC-Komponentenreferenzwert der Brückenzweigströme;
Berechnen, für jede der drei Phasen, eines ersten Kompensationswerts gemäß dem DC-Komponentendifferenzwert für die Phase und einem voreingestellten Proportionalkoeffizienten; und
Berechnen, für jede der drei Phasen, durch einen zweiten LPF, des Spannungskompensationswerts gemäß dem ersten Kompensationswert für die Phase.

2. Verfahren nach Anspruch 1, wobei das Erzeugen (S105), für jede der drei Phasen, der korrigierten Brückenzweigmodulationswellen gemäß dem Spannungskompensationswert und dem Kreisstrom-Regelspannungskompensationswert für die Phase umfasst:
Erzeugen, für jede der drei Phasen, von ersten Brückenzweigreferenzwellen gemäß dem Spannungskompensationswert und anfänglichen Brückenzweigreferenzwellen für die Phase; und
Erzeugen, für jede der drei Phasen, von korrigierten Brückenzweigreferenzwellen gemäß den ersten Brückenzweigreferenzwellen und dem Kreisstrom-Regelspannungskompensationswert für die Phase.

3. Verfahren nach Anspruch 1, wobei das Erfassen (S101), für jede der drei Phasen, der einphasigen Wirkleistung auf der AC-Seite des Umrichterventils umfasst:
Erfassen, für jede der drei Phasen, eines Wechselstroms auf einer Ventilseite und einer AC-Spannung auf der Ventilseite; und
Berechnen, für jede der drei Phasen, der einphasigen Wirkleistung auf der AC-Seite des Umrichterventils gemäß dem Wechselstrom auf der Ventilseite und der AC-Spannung auf der Ventilseite für die Phase.

4. Verfahren nach Anspruch 3, wobei das Erfassen, für jede der drei Phasen, des Wechselstroms auf der Ventilseite umfasst:
Erhalten, für jede der drei Phasen, des Wechselstroms auf der Ventilseite gemäß einem Differenzwert zwischen einem oberen Brückenzweigstrom und einem unteren Brückenzweigstrom für die Phase.

5. Verfahren nach Anspruch 3, wobei das Erfassen, für jede der drei Phasen, der AC-Spannung auf der Ventilseite umfasst:
Erfassen, für jede der drei Phasen, einer oberen Brückenzweigreferenzwelle und einer unteren Brückenzweigreferenzwelle; und
Erhalten, für jede der drei Phasen, der AC-Spannung auf der Ventilseite gemäß der Hälfte eines Differenzwerts zwischen der oberen Brückenzweigreferenzwelle und der unteren Brückenzweigreferenzwelle für die Phase.

6. Verfahren nach Anspruch 1, wobei das Erfassen (S101), für jede der drei Phasen, des DC-Spannungsreferenzwerts des DC-Übertragungssystems umfasst:
Erfassen, für jede der drei Phasen, einer oberen Brückenzweigreferenzwelle und einer unteren Brückenzweigreferenzwelle; und
Erhalten, für jede der drei Phasen, des DC-Spannungsreferenzwerts des DC-Übertragungssystems gemäß der Hälfte einer Summe der oberen Brückenzweigreferenzwelle und der unteren Brückenzweigreferenzwelle für die Phase.

7. Einrichtung (110) zum Unterdrücken von Schwingungen auf einer Gleichstromseite, DC-Seite, eines flexiblen Gleichstromübertragungssystems, FDCTS, wobei die Einrichtung umfasst:
einen Parametererfassungsteil (1101), der konfiguriert ist, um für jede der drei Phasen eine einphasige Wirkleistung auf einer Wechselstromseite, AC-Seite, eines Umrichterventils, einen DC-Spannungsreferenzwert eines DC-Übertragungssystems, Brückenzweigströme und einen Kreisstrom-Regelspannungskompensationswert zu erfassen;
einen ersten Berechnungsteil (1102), der konfiguriert ist, um für die drei Phasen einen DC-Komponentenreferenzwert von Brückenzweigströmen gemäß der einphasigen Wirkleistung auf der AC-Seite des Umrichterventils und dem DC-Spannungsreferenzwert des DC-Übertragungssystems für jede der drei Phasen zu berechnen;
einen zweiten Berechnungsteil (1103), der konfiguriert ist, um für jede der drei Phasen eine DC-Komponente der Brückenzweigströme gemäß den Brückenzweigströmen für die Phase zu berechnen;
einen dritten Berechnungsteil (1104), der konfiguriert ist, um für jede der drei Phasen einen Spannungskompensationswert gemäß der DC-Komponente der Brückenzweigströme für die Phase und dem DC-Komponentenreferenzwert der Brückenzweigströme zu berechnen; und
einen Korrekturteil (1105), der konfiguriert ist, um für jede der drei Phasen korrigierte Brückenzweigmodulationswellen gemäß dem Spannungskompensationswert und dem Kreisstrom-Regelspannungskompensationswert für die Phase zu erzeugen;
wobei der erste Berechnungsteil (1102) ferner konfiguriert ist zum:
Dividieren, für jede der drei Phasen, der einphasigen Wirkleistung auf der AC-Seite des Umrichterventils durch den DC-Spannungsreferenzwert des DC-Übertragungssystems, um eine einphasige DC-Komponente für die Phase zu erhalten;
Addieren der einphasigen DC-Komponenten für die drei Phasen, um eine Summe der einphasigen DC-Komponenten zu erhalten; und
Filtern, durch einen ersten Tiefpassfilter, LPF, der Summe der einphasigen DC-Komponenten und Dividieren der gefilterten Summe der einphasigen DC-Komponenten durch 3, um den DC-Komponentenreferenzwert der Brückenzweigströme zu erhalten;
wobei der dritte Berechnungsteil (1104) ferner konfiguriert ist zum:
Erhalten, für jede der drei Phasen, eines DC-Komponentendifferenzwerts gemäß einem Vergleich zwischen der DC-Komponente der Brückenzweigströme für die Phase und dem DC-Komponentenreferenzwert der Brückenzweigströme;
Berechnen, für jede der drei Phasen, eines ersten Kompensationswerts gemäß dem DC-Komponentendifferenzwert für die Phase und einem voreingestellten Proportionalkoeffizienten; und
Berechnen, für jede der drei Phasen, durch einen zweiten LPF, des Spannungskompensationswerts gemäß dem ersten Kompensationswert für die Phase.

8. Computerlesbares Speichermedium, auf dem Computeranweisungen gespeichert sind, wobei die Computeranweisungen einen Computer ermöglichen, das Verfahren zum Unterdrücken von Schwingungen auf einer DC-Seite eines FDCTS nach einem der Ansprüche 1 bis 6 auszuführen.

9. Elektronische Vorrichtung (50), umfassend einen Speicher (52) und einen Prozessor (51), die kommunikativ miteinander verbunden sind, wobei der Speicher (52) Computeranweisungen speichert und der Prozessor (51) konfiguriert ist, um das Verfahren zum Unterdrücken von Schwingungen auf einer DC-Seite eines FDCTS nach einem der Ansprüche 1 bis 6 durch Ausführen der Computeranweisungen auszuführen.

## Revendications

1. Procédé permettant de supprimer une oscillation sur un côté courant continu, CC, d'un système de transmission CC flexible, FDCTS, dans lequel le procédé comprend :
l'acquisition (S101), pour chacune de trois phases, d'une puissance active monophasée sur un côté courant alternatif, CA, d'une valve de convertisseur, d'une valeur de référence de tension CC d'un système de transmission CC, de courants de bras de pont, et d'une valeur de compensation de tension de commande de courant circulant ;
le calcul (S102), pour les trois phases, d'une valeur de référence de composante CC de courants de bras de pont, selon la puissance active monophasée sur le côté CA de la valve de convertisseur et la valeur de référence de tension CC du système de transmission CC pour chacune des trois phases ;
le calcul (S103), pour chacune des trois phases, d'une composante CC des courants de bras de pont, selon les courants de bras de pont pour la phase ;
le calcul (S104), pour chacune des trois phases, d'une valeur de compensation de tension, selon la composante CC des courants de bras de pont pour la phase et la valeur de référence de composante CC des courants de bras de pont ; et
la génération (S105), pour chacune des trois phases, d'ondes modulées de bras de pont corrigées, selon la valeur de compensation de tension et la valeur de compensation de tension de commande de courant circulant pour la phase ;
dans lequel le calcul (S102), pour les trois phases, de la valeur de référence de composante CC de courants de bras de pont, selon la puissance active monophasée sur le côté CA de la valve de convertisseur et la valeur de référence de tension CC du système de transmission CC pour chacune des trois phases, comprend :
la division, pour chacune des trois phases, de la puissance active monophasée sur le côté CA de la valve de convertisseur par la valeur de référence de tension CC du système de transmission CC, afin d'obtenir une composante CC monophasée pour la phase ;
l'ajout des composantes CC monophasées pour les trois phases, afin d'obtenir une somme des composantes CC monophasées ; et
le filtrage, par un premier filtre passe-bas, LPF, de la somme des composantes CC monophasées, et la division de la somme filtrée des composantes CC monophasées par 3, afin d'obtenir la valeur de référence de composante CC de courants de bras de pont ;
dans lequel le calcul (S104), pour chacune des trois phases, de la valeur de compensation de tension, selon la composante CC des courants de bras de pont pour la phase et la valeur de référence de composante CC des courants de bras de pont, comprend :
l'obtention, pour chacune des trois phases, d'une valeur de différence de composante CC, selon la comparaison entre la composante CC des courants de bras de pont pour la phase et la valeur de référence de composante CC des courants de bras de pont ;
le calcul, pour chacune des trois phases, d'une première valeur de compensation, selon la valeur de différence de composante CC pour la phase et un coefficient proportionnel prédéfini ; et
le calcul, pour chacune des trois phases, par un second LPF, de la valeur de compensation de tension selon la première valeur de compensation pour la phase.

2. Procédé selon la revendication 1, dans lequel la génération (S105), pour chacune des trois phases, des ondes modulées de bras de pont corrigées, selon la valeur de compensation de tension et la valeur de compensation de tension de commande de courant circulant pour la phase, comprend :
la génération, pour chacune des trois phases, de premières ondes de référence de bras de pont, selon la valeur de compensation de tension et des ondes de référence de bras de pont initiales pour la phase ; et
la génération, pour chacune des trois phases, d'ondes de référence de bras de pont corrigées, selon les premières ondes de référence de bras de pont et la valeur de compensation de tension de commande de courant circulant pour la phase.

3. Procédé selon la revendication 1, dans lequel l'acquisition (S101), pour chacune des trois phases, de la puissance active monophasée sur le côté CA de la valve de convertisseur, comprend :
l'acquisition, pour chacune des trois phases, d'un courant CA sur un côté valve et d'une tension CA sur le côté valve ; et
le calcul, pour chacune des trois phases, de la puissance active monophasée sur le côté CA de la valve de convertisseur, selon le courant CA sur le côté valve et de la tension CA sur le côté valve pour la phase.

4. Procédé selon la revendication 3, dans lequel l'acquisition, pour chacune des trois phases, du courant CA sur le côté valve, comprend :
l'obtention, pour chacune des trois phases, du courant CA sur le côté valve, selon une valeur de différence entre un courant de bras de pont supérieur et un courant de bras de pont inférieur pour la phase.

5. Procédé selon la revendication 3, dans lequel l'acquisition, pour chacune des trois phases, de la tension CA sur le côté valve, comprend :
l'acquisition, pour chacune des trois phases, d'une onde de référence de bras de pont supérieur et d'une onde de référence de bras de pont inférieur ; et
l'obtention, pour chacune des trois phases, de la tension CA sur le côté valve, selon la moitié d'une valeur de différence entre l'onde de référence de bras de pont supérieur et l'onde de référence de bras de pont inférieur pour la phase.

6. Procédé selon la revendication 1, dans lequel l'acquisition (S101), pour chacune des trois phases, de la valeur de référence de tension CC du système de transmission CC, comprend :
l'acquisition, pour chacune des trois phases, d'une onde de référence de bras de pont supérieur et d'une onde de référence de bras de pont inférieur ; et
l'obtention, pour chacune des trois phases, de la valeur de référence de tension CC du système de transmission CC, selon la moitié d'une somme de l'onde de référence de bras de pont supérieur et de l'onde de référence de bras de pont inférieur pour la phase.

7. Appareil (110) permettant de supprimer une oscillation sur un côté courant continu, CC, d'un système de transmission CC flexible, FDCTS, dans lequel l'appareil comprend :
une partie d'acquisition de paramètres (1101) configurée pour acquérir, pour chacune de trois phases, une puissance active monophasée sur un côté courant alternatif, CA, une valve de convertisseur, une valeur de référence de tension CC d'un système de transmission CC, des courants de bras de pont, et une valeur de compensation de tension de commande de courant circulant ;
une première partie de calcul (1102) configurée pour calculer, pour les trois phases, une valeur de référence de composante CC de courants de bras de pont, selon la puissance active monophasée sur le côté CA de la valve de convertisseur et la valeur de référence de tension CC du système de transmission CC pour chacune des trois phases ;
une deuxième partie de calcul (1103) configurée pour calculer, pour chacune des trois phases, une composante CC des courants de bras de pont, selon les courants de bras de pont pour la phase ;
une troisième partie de calcul (1104) configurée pour calculer, pour chacune des trois phases, une valeur de compensation de tension, selon la composante CC des courants de bras de pont pour la phase et la valeur de référence de composante CC des courants de bras de pont ; et
une partie de correction (1105) configurée pour générer, pour chacune des trois phases, des ondes modulées de bras de pont corrigées, selon la valeur de compensation de tension et la valeur de compensation de tension de commande de courant circulant pour la phase ;
dans lequel la première partie de calcul (1102) est en outre configurée pour :
diviser, pour chacune des trois phases, la puissance active monophasée sur le côté CA de la valve de convertisseur par la valeur de référence de tension CC du système de transmission CC, afin d'obtenir une composante CC monophasée pour la phase ;
ajouter les composantes CC monophasées pour les trois phases, afin d'obtenir une somme des composantes CC monophasées ; et
filtrer, par un premier filtre passe-bas, LPF, la somme des composantes CC monophasées, et diviser la somme filtrée des composantes CC monophasées par 3, afin d'obtenir la valeur de référence de composante CC de courants de bras de pont ;
dans lequel la troisième partie de calcul (1104) est en outre configurée pour :
obtenir, pour chacune des trois phases, une valeur de différence de composante CC, selon la comparaison entre la composante CC des courants de bras de pont pour la phase et la valeur de référence de composante CC des courants de bras de pont ;
calculer, pour chacune des trois phases, une première valeur de compensation, selon la valeur de différence de composante CC pour la phase et un coefficient proportionnel prédéfini ; et
calculer, pour chacune des trois phases, par un second LPF, la valeur de compensation de tension selon la première valeur de compensation pour la phase.

8. Support de stockage lisible par un ordinateur sur lequel sont stockées des instructions informatiques, les instructions informatiques permettant à un ordinateur d'exécuter le procédé permettant de supprimer une oscillation sur un côté CC d'un FDCTS selon l'une quelconque des revendications 1 à 6.

9. Dispositif électronique (50), comprenant une mémoire (52) et un processeur (51) connectés en communication l'un à l'autre, la mémoire (52) stockant des instructions informatiques, et le processeur (51) étant configuré pour exécuter le procédé permettant de supprimer une oscillation sur un côté CC d'un FDCTS selon l'une quelconque des revendications 1 à 6 par exécution des instructions informatiques.
